Europäisches Patentamt

European Patent Office

Office européen des brevets

(11) Publication number: **0 372 786**
**A2**

## (12) EUROPEAN PATENT APPLICATION

(21) Application number: 89312322.4

(22) Date of filing: 28.11.89

(51) Int. Cl.⁵: **B23K 37/04, B23K 26/12, B23K 26/08**

(30) Priority: 02.12.88 US 279010

(43) Date of publication of application:
13.06.90 Bulletin 90/24

(84) Designated Contracting States:
DE ES SE

(71) Applicant: GENERAL ELECTRIC COMPANY
1 River Road
Schenectady, NY 12345(US)

(72) Inventor: Muncy, Donald Gene
434 Aquarius Drive
Wilmington North Carolina 28405(US)

(74) Representative: Smith, Thomas Ian Macdonald
et al
London Patent Operation G.E. Technical
Services Co. Inc. Burdett House 15-16
Buckingham Street
London WC2N 6DU(GB)

(54) System for automated welding of parts assembly in controlled environment.

(57) A laser welding system utilizes a multiple axes positioner to angularly orient about orthogonal A and C axes and linearly position along orthogonal X and Y axes a fixtured parts assembly (62) such as to access weld sites at the top, bottom and all sides thereof. Linear ajustments of the position of the laser head (126) along a Z axis are made to maintain a constant beam focal length. Welding in an inert gas environment is thus facilitated, since the welding operation can be completed without human intervention to manually reposition the fixture. Interim purging to restore the requisite welding environment is therefore avoided.

FIG.6

## SYSTEM FOR AUTOMATED WELDING OF PARTS ASSEMBLY IN CONTROLLED ENVIRONMENT

The present invention relates to welding systems, and particularly to a welding system for performing a multiplicity of welds of varying character at multiple sites to join a plurality of parts into a complex assembly on an automated basis.

There are numerous manufacturing applications calling for the welding of a multiplicity of metal parts into a complex assembly of exacting dimensional tolerances and physical integrity. The welding process choice depends in large measure on the metallurgical characteristics of the parts. In some cases, the welds must be performed in a controlled environment ranging from a vacuum to a high positive pressure. When the parts are formed of a particularly reactive metal, welding in an inert gas atmosphere is required to prevent degradation of the part's physical characteristics. This means that the welding process must be performed in a sealed enclosure or weld box while filled with an appropriate inert gas, such as argon. Thus, each time the weld box is opened to unload a welded assembly and to load a fixtured assembly of loose parts for the next welding operation, considerable time must be spent purging the weld box of reactive gases (air) in order to re-establish the inert gas atmosphere to its requisite integrity. Obviously, this purging step slows the manufacturing process and involves a considerable expenditure of inert gas. If the welding operation has to be interrupted to manually reposition the weld fixture carrying the partially welded parts assembly so as to access other weld sites on the assembly, the purging step must be repeated.

It is accordingly an object of the present invention to provide an improved system for precision conjoining a multiplicity of parts into a structurally rigid, complex assembly.

Other objects of the invention will in part be obvious and in part appear appear hereinafter.

In accordance with one aspect of the invention, there is provided a welding system for uniting a multiplicity of parts into a structurally rigid assemble under a controlled environment. To this end, the welding system includes a multi-axes positioning apparatus for supporting a fixture holding the parts in assembled positional relation. The positioning apparatus is computer controlled to variously position the fixtured parts assembly such as to access weld sites on all sides of the assembly in rapid, uninterrupted succession.

Thus, the fixtured parts assembly is translated by the positioning apparatus along X and Y axes to access weld sites on the top thereof, rotated about an A axis and translated along the X and Y axes to access weld sites on the bottom thereof, and rotated about a C axis orthogonal to the A axis and translated along the X and Y axes to access weld sites on all sides of the fixture parts assembly. The requisite relationship of each weld site to the welding instrumentality is achieved by positional adjustments along the Z axis orthogonal to both the X and Y axes. In the disclosed embodiment, the welding instrumentality is a laser welder, and Z axis positional adjustments are preferably effected by variously positioning the laser focusing head such that each weld site is aligned with the laser beam at uniformly fixed focal length relative positions. All weld sites on the fixtured parts assembly can be accessed for welding in uninterrupted succession on an automated basis without interim breaching of the sealed welding enclosure and thus without disrupting the controlled environment therein.

For a full understanding of the nature and objects of the present invention, reference may be had to the following description, taken in connection with the accompanying drawings, in which:

Figure 1 is an elevational view of a nuclear fuel bundle;

FIGURE 2 is a plan view of one of the nuclear fuel rod-positioning spacers utilized in the bundle of FIGURE 1;

FIGURE 3 is a side view, partially broken away, of the spacer of FIGURE 2;

FIGURE 4 is a perspective frontal view of a spacer welding system constructed in accordance with the present invention;

FIGURE 5 is a plan view of a welding fixture for retaining the spacer parts in assembly relation during welding;

FIGURE 6 is a front elevational view, partially in diagramatic form, of welding fixture positioning apparatus utilized in the welding system of FIGURE 4;

FIGURE 7 is a plan view of the positioning apparatus of FIGURE 6; and

FIGURE 8 is a front elevational view of the positioning apparatus of FIGURE 6 with the welding fixture position on its side in a vertical plane.

Corresponding reference numerals refer to like parts throughout the several views of the drawings.

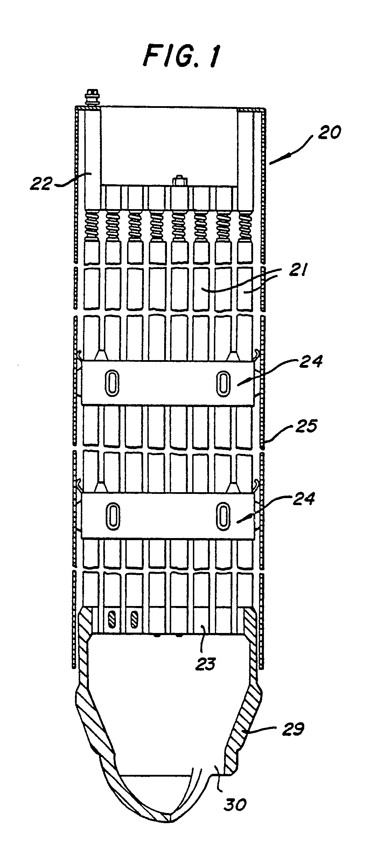

A fuel bundle, generally indicated at 20 in FIGURE 1, comprises a plurality of fuel elements or rods 21 supported between a skeletonized upper tie plate 22 and a skeletonized lower tie plate 23. The fuel rods 21 pass through a plurality of fuel rod spacers 24 which provide intermediate support to retain the elongated rods in spaced relation and restrain them from lateral vibration. Each of the fuel rods 21 is formed of an elongated cladding tube containing fissile fuel and other materials, such as fertile fuel, burnable poison, inert material or the like, sealed in the tube by upper and lower end plugs which are engaged by the upper and lower tie plates.

Fuel bundle 20 further includes a thin-walled tubular flow channel 25 of substantially square cross section, sized to form a sliding fit over the upper and lower tie plates 22 and 23 and the spacers 24 so that the channel may readily be mounted and removed. The lower tie plate 23 is formed with a nose piece 29 adapted to support the fuel bundle 20 in a socket of a core support plate (not shown) in the reactor pressure vessel. The end of this nose piece is formed with openings 30 to receive pressurized coolant which flows upwardly through the fuel bundle.

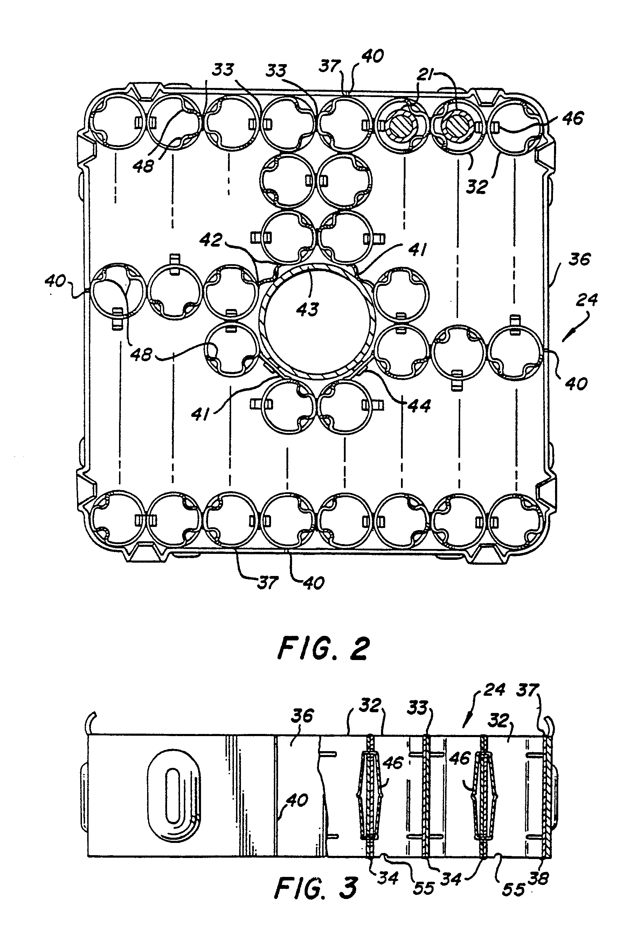

Spacer 24 is constructed in the manner described and claimed in our U.S. Patent No. 4,508,679 (inventors Matzner et al). Thus, spacer 24, as seen in FIGURES 2 and 3 herein, is made up of tubular cells or ferrules 32 arranged in a matrix array with their points of peripheral abutment conjoined by butt welds at their upper and lower edges, as illustrated at 33 and 34. The bore of each ferrule provides a passage for an elongated element of the fuel assembly, such as fuel rod 21.

A perimetrical band 36 is conjoined to the upper and lower edges of the peripheral ferrules of the assembled matrix at their points of abutment by upper and lower butt welds 37 and 38. This peripheral support band is assembled in four similar L-shaped pieces each positioned about a corner of the ferrule array with their ends meeting at the center of an outer ferrule where they are joined by a seam weld 40. Straps 41 are spot welded as indicated at 42, to the ferrules bounding a central opening in spacer 24 for accommodating a water pipe 43. Pipe-engaging springs 44 are carried by two of these straps to prevent vibration.

Fuel rods 21, or other elongated elements, extending through the ferrule passages 35 are centered and laterally supported therein between a resilient spring 46 and generally oppositely positioned axially spaced pairs of relatively rigid projections or stops 48. These stops are formed integrally with each ferrule as laterally spaced pairs of inwardly projecting, fluted portions of the ferrule wall near the upper and lower edges thereof.

Each spring is in the form of a double-sided, continuous loop spring which is assembled to each of separate pairs of adjacent ferrules in the manner disclosed in the above-cited U.S. Patent No. 4,508,679. Thus, the two sides of the spring respectively project into the bores of the ferrule pair to which it is assembled to effect its rod-centering function with respect to both ferrules of the pair.

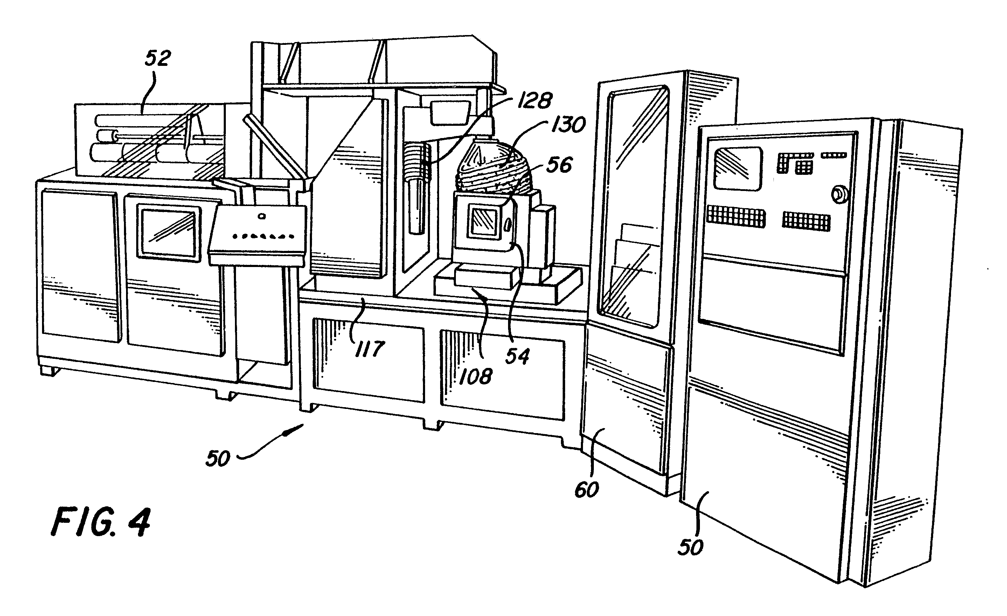

The present invention is directed to a welding system and particularly a laser welding system for effecting the various welds 33, 34, 37, 38, 40 and 42 conjoining the various parts into the structurally rigid spacer assembly 24 seen in FIGURES 2 and 3. Thus, as seen in FIGURE 4, a laser welding station, generally indicated at 50, comprises a suitable laser 52, such as a Coherent General Model S-51 $CO_2$ laser, equipped with appropriate optics to direct its laser beam vertically downward into a welding enclosure or weld box 54 in which the various spacer parts fixtured in spacer assembly relation are placed for welding. Since the preferred spacer material, except for the springs, is a zirconium alloy, such as Zircaloy, due to its low neutron absorption cross section, welding must be performed in an inert gas atmosphere of high purity because of the highly reactive nature of this material. That is, a zirconium alloy, when heated to the welding temperatures, reacts particularly with oxygen in the ambient atmosphere with consequent degradation in weld quality. Thus, the interior of weld box, to which access is gained via a door 56 for loading and unloading of the fixtured spacer parts assembly, must be maintained with an inert gas atmosphere, typically argon, of extreme purity throughout the welding operation. Each time door 56 is opened, the weld box interior must be purged of air to re-establish the requisite inert gas atmosphere before welding can resume. This involves considerable time and a significant expenditure of inert gas.

The laser welder is served by a power supply 60 and a control console 58 in which is included a computer numerical controller, such as a General Electric Company MC 2000 CNC. This controller is programmed to automatically control the welding operation, including the positioning of the fixtured spacer part assembly to successively align the multiplicity of weld sites with the laser beam and to regulate the supply of inert gas to provide the requisite welding environment within the weld box. The control console may also include a programmable logic controller, such as a General Electric Company Series One Plus Controller, operating to interface the laser welding station with a central host computer, such as disclosed in U.S. Patent No. 4869865 of 26 September 1989.

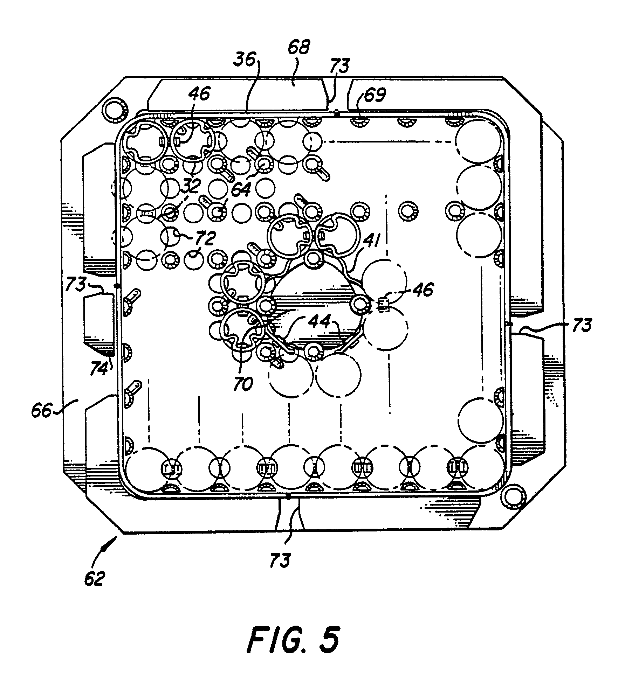

Turning to FIGURE 5, the ferrules 32 are assembled in pairs, each with a captive spring 46, into a spacer fixture, generally indicated at 62, preferably by automated equipment such as disclosed and claimed in our co-filed European Application No.      based on U.S application Serial No. 279006, filed on 2 December 1988 and entitled "Automated Assembly Apparatus". This fixture includes an array of guide posts 64 upstanding from a base plate 66, which are precisely positioned to accurately control the placement of each successive ferrule pair in assigned fixture locations. Once the spacer fixture has been loaded with its full quota of ferrule pairs, the four corner sections making up perimetrical band 36 are manually inserted between segmented, upstanding fixture sidewalls 68 and half-sectional guide posts 69. In addition, the four straps 41 are manually inserted between a central fixture hub 70 and appropriate pairs of immediately surrounding ferrules. Base plate 66 is provided with a multiplicity of openings 72 to afford laser beam access to those weld sites on the bottom of the fixtured spacer parts assembly to effect butt welds 34, 38 and bottom strap butt welds 42. The gaps 73 in the fixture sidewalls access the weld sites for the four seam welds 40 uniting the perimetrical band sections, while gap 74 provides an opening for laser scribing a unique serial number on the surface band 36.

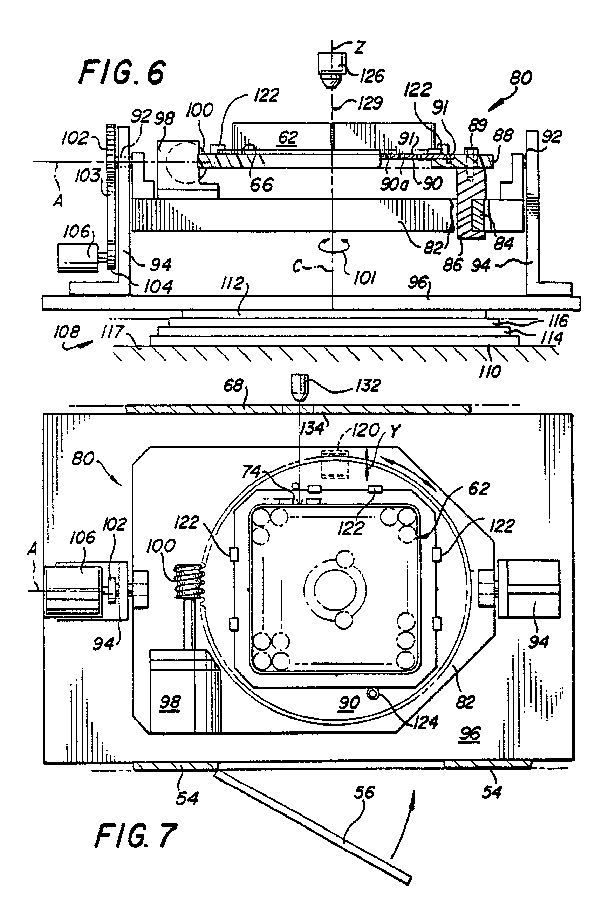

Fixture 62, retaining the spacer parts in assembled relation, is loaded onto a multi-axes positioner, generally indicated at 80 in FIGURES 6 through 8. This positioner includes, as an embodiment of the present invention, a platform 82 which is machined with a central opening to provide a precision circular track 84 for accepting a distributed plurality of bearings 86 to which a ring gear 88 is affixed by screws 89, all as illustrated in FIGURE 6. This ring gear in turn supports a fixture platen 90 affixed thereto by screws 91. Platform 82 is provided with diametrically opposed stub shafts 92 which are journalled for platform rotation about an A axis by a pair of opposed trunnions 94 upstanding from a base plate 96. A motor 98, mounted by platform 82, drives a worm gear 100 which engages ring gear 88 to produce rotation of platen 90 about a C axis, as indicated by arrow 101. In addition, an extension of one stub shaft 92 carries a spur gear 102 which is driven via an interconnecting cog belt 103 by a pinion gear 104 journalled by the adjacent trunnion 94. A motor 106, mounted by baseplate 96, drives pinion gear 104 to produce rotation of platform 82 about the A axis, as indicated by arrow 107.

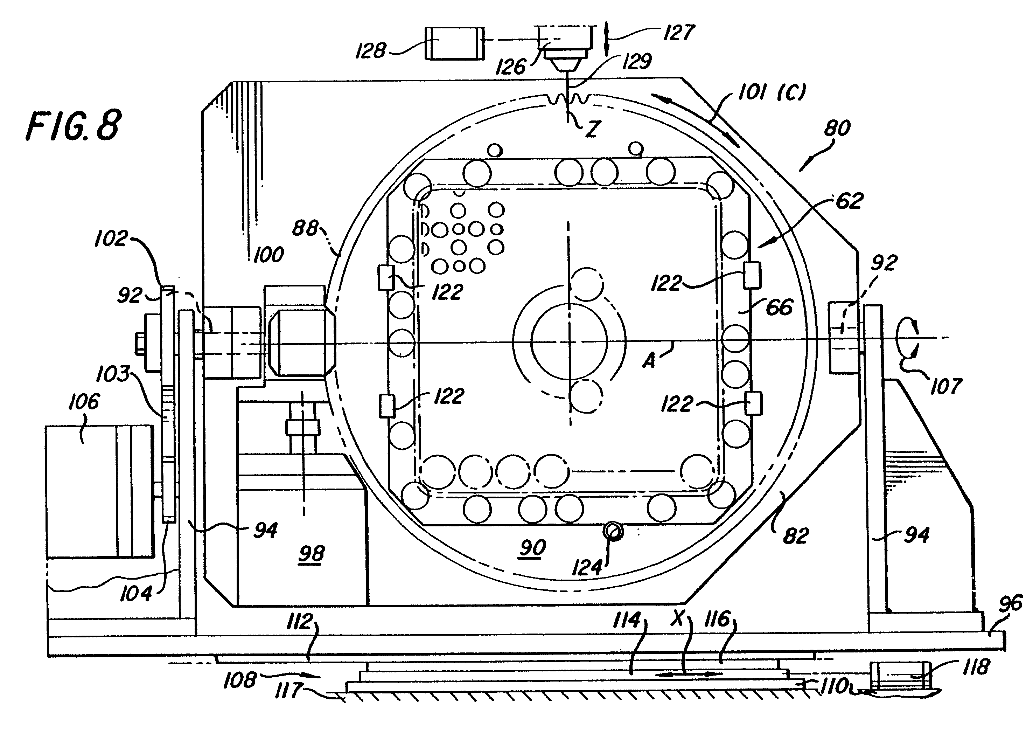

Baseplate 96 is affixed to the floor 112 of weld box 54 which, in turn, is supported on an X-Y positioning cable, generally indicated at 108 in FIGURES 4, 6 and 8. This positioning table includes a base 110 resting on a horizontal support surface 117, an X-axis slide 114, and a Y-axis slide 116. A motor 118 (FIGURE 6) drives slide 114 to variously position the platform-supported platen 90 along the X axis, while a motor 120 (FIGURE 7) variously positions the platen along the Y axis. The energizations of motors 98, 106, 118 and 120 are controlled by control console 58 (FIGURE 4) to successively algin the various weld sites on the fixtured spacer parts assembly 24, as supported on the platen, with the beam of laser 52. Fixture 62, containing the spacer parts in their assembled positions, is slid into a precise loaded position determined by platen-mounted dogs 122 engaging the back and side edges of the fixture base plate 66 and a removable latch pin 124 engaging the front base plate edge, as seen in FIGURES 7 and 8. Platen 90 is perforated with holes 90a which register with the holes 72 in fixture base plate 66 to afford beam access to the weld sites on the underside or bottom of the spacer assembly.

Finally, a downwardly-pointing focusing head 126 of laser 52 is, as diagrammatically illustrated in FIGURE 8, adjustably positioned along the Z axis, as indicated by arrow 127, under the control of control console 58 by a motor 128 to achieve the requisite focal length distance between the various weld sites and the head for laser beam 129. As seen in FIGURE 4, the interface between the laser focusing head and the weld box 54 is enclosed by a bellows 130 to accommodate this Z-axis focusing motion while preserving the inert gas atmosphere within the weld box.

To effect butt welds 33, 37 and 42 at the upper edges of the spacer assembly (FIGURES 2 and 3), platen 90 is positioned in a horizontal plane by motor 106, and table 108 is indexed along the X and Y axes in programmed sequence to position the weld sites for these butt welds in alignment with laser beam 129. Motor 106 is then energized to rotate platform 98 180° degrees and thus invert the fixtured spacer parts assembly. Again the X-Y table is indexed in accordance with the same program sequence to align the weld sites for butt welds 34, 38 and 42 at the assembly bottom edges. Laser beam access to these weld sites is through the registered holes 90a and 72 in the platen 90 and fixture base 66. Preferably, these butt welds on the top and bottom assembly edges are effected on half of the assembly, the platen is rotated 180° by motor 98, and the butt welds effected on the other half of the assembly to simplify programming of the X-Y table positioning movements. When the assembly is inverted to butt weld the lower assembly edges, motor 128 is energized to adjust the position of laser focusing head 126 along the Z axis to a different focal length.

To effect seam welds 40 joining the four sections of perimetrical band 36, motor 106 is energized to rotate platform 82 and platen 90 ninety degrees about the A axis to orient assembly 24 on edge, as seen in FIGURE 8. The focal length of the laser head is adjusted by motor 128, and the X-Y table is activated to align one pair of band section abutting edges with laser beam 129. The assembly is then translated along the Y axes to effect a seam weld 40. Platen 90 is then rotated in 90° steps by motor 98 to effect the remaining three seam welds 40. Laser beam access to these seam weld sites is through gaps 73 in the segmented fixture sidewall 68. It will be appreciated that order in which the various welds are produced is a matter of choice. That is, the seam welds 40 may be created first or as an intermediate welding step between the butt welding of the top and bottom assembly edges.

Upon completion of all the welds uniting the spacer parts into a rigid spacer assembly, platform 82 is repositioned in a horizontal plane with gap 74 (FIGURE 5) in the fixture sidewall 68 in confronting relation with a scribing laser 132, such as a Coherent General Nd: YAG laser, as seen in FIGURE 7. The beam of this laser is directed by a suitable laser marker controller included in power supply 60 and operating under the control of control console 58 to inscribe a unique alpha-numeric serial number on the surface of band 36. The laser scribing beam penetrates the weld box through a transparent window 134.

It is seen that, by virtue of positioning apparatus 80, the described welding system is capable of effecting a multiplicity of welds of varying character at weld sites on the top, bottom and all sides of a complex parts assembly in uninterrupted succession without manual intervention for fixture repositioning. Thus, the weld box door remains closed throughout to preserve the inert gas welding environment. Purging of reactive gases from the weld box interior is required only once for each welding operation after the door has been briefly opened to manually remove a welded spacer parts assembly and substitute an unwelded spacer parts assembly. While the present invention has been disclosed utilizing a laser beam as the welding energy source, it will be appreciated that other welding instrumentalities, such as TIG welders, may be applied to effect a variety of weldments including spot, bead, groove and fillet welds.

There has thus been provided a welding system by which parts can be united by a multiplicity of welds of varying character at a plurality of sites on an automated basis, and by which the various welds can be effected in rapid succession in a controlled environment. The welding operation is performed in an inert gas atmosphere on a fixtured parts assembly while supported on a multi-axes positioning apparatus. In particular the positioning apparatus is capable of variously positioning the fixtured parts assembly relative to a laser beam such as to effect laser welds of varying character at a multiplicity of weld sites. The positioning apparatus is capable of positioning the fixture parts assembly on an automated, programmed basis to access weld sites on all sides of the assembly without human intervention and thus without interruptions in the welding operation. Thus precision welds of varying character can be reliably effected at a multiplicity of weld sites in continuous, rapid succession to create a parts assembly of exacting dimensional characteristics and structural integrity.

It is thus seen that the objectives indicated above, including those made apparent from the preceding description, are efficiently attained. Since certain changes may be made in the disclosed embodiment without departing from the scope of the invention, it is intended that all matters of detail be taken as illustrative and not in a limiting sense.

## Claims

1. A system for welding a multiplicity of parts in conjoined relation to produce a parts assembly, said system comprising, in combination:
A. an enclosure for containing a controlled atmosphere;
B. a fixture holding the loose parts in assembled relation while affording access to the top, bottom and all sides of the fixtured parts assembly;
C. a source of welding energy; and
D. positioning apparatus including
1) a platform situated in said enclosure and mounting said fixture for rotation about a first axis,
2) a base situated in said enclosure and mounting said platform for rotation about a second axis orthogonal to said first axis,
3) a table mounting said base for movement along third and fourth axes orthogonal to each other and
4) separate means for selectively augularly positioning said fixture about said first and second axes and linearly positioning said fixture along said third and fourth axes to align multiple weld sites at the top, bottom and sides of the fixtured parts assembly with said welding energy source, thereby to enable welding the fixtured parts assembly at all of said weld sites in uninterupted succession.

2. The welding system defined in Claim 1, wherein said positioning apparatus further includes additional means for selectively adjusting the positional relationship between said weld sites and said welding energy source along a fifth axis orthogonal to both said third and fourth axes.

3. The welding system defined in Claim 2, wherein said welding energy source is a laser beam.

4. The welding system defined in Claim 3, wherein said enclosure contains an inert gas.

5. The welding system defined in Claim 4, wherein said additional means adjusts the position of the focusing head for said laser beam.

6. The welding system defined in Claim 5, wherein said positioning apparatus further includes a platen on which said fixture is fixedly positioned, said platen rotatably mounted by said platform for rotation about said first axis and having perforations therein to access those weld sites at the bottom of the fixtured parts assembly.

7. The welding system defined in Claim 6, wherein said positioning apparatus further includes a ring gear journalled by said platform for rotation about said first axis, said platen being affixed to said ring gear, and a first drive gear mounted by said platform in meshing engagement with said ring gear, one of said positioning means being a first motor for selectively rotating said first drive gear.

8. The welding system defined in Claim 7, wherein said positioning apparatus further includes a pair of trunnions upstanding from said base, said platform including diametrically opposed stub shafts mounted by said trunnions for platform rotation about said second axis, a spur gear affixed to one of said stub shafts, and a second drive gear mounted by said base in meshing engagement with said spur gear, another of said positioning means being a second motor for selectively rotationg said second drive gear.

9. The welding system defined in Claim 8, wherein said enclosure is mounted on said table.

10. The welding system defined in any preceding claim, wherein the fixtured parts assembly is a rod-positioning spacer to be utilized in a nuclear fuel bundle.

11. The welding system defined in Claim 10, wherein said laser beam and said positioning means are controlled to effect either butt welds or seam welds at the various weld sites on the fixtured spacer parts assembly.

12. The welding system defined in Claim 11, which further includes a scribing laser for inscribing a unique serial number on a surface of the fixtured spacer parts assembly.

# FIG. 1

FIG. 2

FIG. 3

FIG. 4

EP 0 372 786 A2

FIG. 5

FIG.6

FIG.7

FIG.8